# EUROPÄISCHE PATENTSCHRIFT

(11) **EP 2 199 557 B1**
(45) Veröffentlichungstag und Bekanntmachung des Hinweises auf die Patenterteilung: **29.02.2012**
(21) Anmeldenummer: 09179566.6
(22) Anmeldetag: 17.12.2009
(51) Int. Cl.: F01N 3/20

(54) **Einrichtung zur Entnahme einer wässrigen Harnstoff-Lösung aus einem Tank in einem Kraftfahrzeug**
Device for extracting an aqueous urea solution from a tank in a motor vehicle
Dispositif de prélèvement d'une solution d'urée aqueuse dans un réservoir d'un véhicule

(30) Priorität: 17.12.2008 DE 102008062673
(43) Veröffentlichungstag der Anmeldung: 23.06.2010
(73) Patentinhaber: Continental Automotive GmbH, 30165 Hannover (DE)
(72) Erfinder: Friedel, Jörg, 93173 Wenzenbach/Grünthal (DE); Smirra, Karl, 83512 Wasserburg (DE)

(56) Entgegenhaltungen:
- WO-A1-2007/017080
- DE-A1- 10 319 841
- DE-A1-102006 027 487
- DE-A1-102006 046 899
- DE-A1-102006 046 900
- GB-A- 2 363 084

## Beschreibung

Die Erfindung betrifft eine Entnahmeeinrichtung einer wässrigen Harnstoff-Lösung in einem Kraftfahrzeug mit einem Flüssigkeitsbehälter zur Speicherung der Lösung und mit einer Fördereinheit zur Förderung der Lösung aus dem Flüssigkeitsbehälter.

Solche Entnahmeeinrichtungen werden bei heutigen Kraftfahrzeugen häufig zur Verringerung von Stickstoffemissionen benötigt und sind aus der Praxis bekannt. Die bekannte Entnahmeeinrichtung weist eine hydraulische Pumpe der Fördereinheit mit einer Filtereinrichtung zum Schutz der hydraulischen Pumpe auf. Weiterhin sind eine Heizeinrichtung in dem Flüssigkeitsbehälter sowie eine weitere Heizeinrichtung an der hydraulischen Pumpe angeordnet. Die Heizeinrichtungen stellen sicher, dass eine Eisbildung der wässrigen Lösung bei niedrigen. Temperaturen vermieden wird. Die einzelnen Bauteile der bekannten Entnahmeeinrichtung werden an dem Flüssigkeitsbehälter montiert und aufwändig gegenüber der Umgebung abgedichtet, Dies führt zu einem sehr aufwändigen Aufbau und einer aufwändigen Abdichtung der Entnahmeeinrichtung. Weiterhin muss bei den bekannten Entnahmeeinrichtungen eine besonders große Menge an wässriger Lösung aufgetaut werden, was zu einer verzögerten Förderung der wässrigen Lösung nach einem Start der Entnahmeeinrichtung führt.

Aus der DE 103 19 841 A1 ist eine Einrichtung zur Abgasnachbehandlung in Dieselverbrennungsmotoren bekannt, bei der eine Nachbehandlungsflüssigkeit dadurch aus einem Vorratstank gefördert wird, dass der Vorratstank über eine Luftleitung unter Druck gesetzt wird.

Aus der GB 2 363 084 A ist eine Einrichtung zur Abgasnachbehandlung bekannt, bei welcher eine Nachbehandlungsflüssigkeit dem Abgas mit Druckluft vermischt als Emulsion zugeführt wird. Die Druckluft wird zusätzlich auch zur Förderung der Nachbehandlungsflüssigkeit aus einem Vorratstank verwendet.

Aus der DE 10 2006 027 487 A1 ist ein Fahrzeugtank für ein flüssiges Reduktionsmittel bekannt, welcher einen Innenbehälter mit einer elektrischen Heizung aufweist.

Aus der DE 10 2008 000 272 A1 geht zudem eine Reduktionsmittel-Zufühvorrichtung hervcr, die mit einer Luftpumpe zum Zuführen/Ansaugen von Luft in/aus einen Gasphasenabschnitt eines Tanks ausgeführt ist. Der Tank ist unterteilt in einen ersten Tank, der in sich die Zuführpumpe zum Ansaugen des Reduktionsmittels durch die Zuführpumpe aufnimmt, und einen zweiten Tank zum Ausbilden eines Flüssigkeits- und Gasphasenabschnitts. Die Luftpumpe erfüllt hierbei die Funktion, den Pegel des Reduktionsmittels soweit abzuziehen, dass beim Stopp der Maschine kein Reduktionmittel in der Zuführpumpe verbleibt, das dann gefrieren könnte.

Ausgehend von diesem Stand der Technik liegt bei der Erfindung das Problem zugrunde, eine Entnahmeeinrichtung der eingangs genannten Art so weiter zu bilden, dass sie besonders einfach aufgebaut ist und auch bei niedrigen Temperaturen eine schnelle Förderung von wässriger Lösung ermöglicht.

Dieses Problem wird erfindungsgemäß dadurch gelöst, dass ein zweiter zum Sammeln der Lösung aus dem Flüssigkeitsbehälter ausgebildeter Behälter im Flüssigkeitsbehälter angeordnet ist und dass der zweite Behälter eine Heizeinheit zur Beheizung der zu fördernden Lösung aufweist und dass die Fördereinheit zur Förderung der Lösung aus dem zweiten Behälter ausgebildet ist.

Durch diese Gestaltung weist die erfindungsgemäße Entnahmeeinrichtung eine geringe Anzahl an gegenüber der Umgebung abzudichtenden Bauteilen auf. Weiterhin wird durch die Beheizung des zweiten Behälters zunächst nur eine kleine Menge an wässriger Lösung aufgetaut, was einen schnellen Start der Entnahmeeinrichtung ermöglicht. Mit der Abwärme des zweiten Behälters wird anschließend auch der Flüssigkeitsbehälter mit geheizt, so dass aufgetaute wässrige Lösung in den zweiten Behälter nachströmen kann. Die erfindungsgemäße Entnahmeeinrichtung weist hierdurch einen besonders kompakten Aufbau auf und ist besonders einfach aufgebaut. Hierdurch führt ein Platzen des zweiten Behälters nicht zu einem Entweichen der Lösung in die Umgebung. Vorzugsweise beträgt das Verhältnis des Volumens des zweiten Behälters zu dem Flüssigkeitsbehälter,1 zu 15 bis 1 zu 20, so dass ein Platzen des zweiten Behälters nicht zu einer unzulässigen Drucksteigerung im Flüssigkeitsbehälter führt.

Ein hydraulisches Absaugen der Flüssigkeit lässt sich gemäß der Erfindung vermeiden, wenn die Fördereinheit eine Luftpumpe aufweist und mit dem zweiten Behälter verbunden ist und wenn ein Anschlussstutzen einer Vorlaufleitung mit dem Bodenbereich des zweiten Behälters verbunden ist. Durch diese Gestaltung wird vermieden, dass Bauteile der Fördereinheit unmittelbar mit der wässrigen Lösung in Kontakt kommen, was zu einer Verminderung der Einfriergefahr der Fördereinheit beiträgt. Zudem führt eine Leckage an der Fördereinheit oder an dem zweiten Behälter nicht zu einer Kontaminierung der Umwelt mit der wässrigen Lösung.

Eine Luftpumpe im Sinne dieser Erfindung ist insbesondere in der Lage, einen Druck in der Fördereinheit von mindestens 3 bar, insbesondere mindestens 5 bar zu realisieren. Für die meisten hier angesprochenen Anwendungsfälle wird voraussichtlich ein zu realisierender Maximaldruck 8 bar ausreichen. For den Fall, dass ein relativ großer Druck aufgebaut und/oder Volumen verdichtet werden muss, können mehrere Luftpumpen miteinander zusammenwirken. Gegebenenfalls ist es auch möglich, auf bereits im Automobil vorhandene Luftpumpen (Kompressor bzw. Luftverdichter) zurückzugreifen, wie z. B. aus einem Bremssystem. Als Luftpumpe kommt bevorzugt eine Kolbenpumpe in Betracht.

Diese Gestaltung trägt zur weiteren Verringerung der Anzahl der Dichtstellen in der erfindungsgemäßen Entnahmeeinrichtung bei.

Die Fördereinheit könnte beispielsweise innerhalb des Flüssigkeitsbehälters angeordnet sein. Dies führt jedoch zu einem hohen Aufwand zur Abdichtung und der Materialwahl der Bauteile der Fördereinheit. Ein Kontakt der Fördereinheit mit der wässrigen Lösung lässt sich gemäß einer anderen vorteilhaften Weiterbildung der Erfindung einfach vermeiden, wenn eine Luftpumpe der Fördereinheit außerhalb des Flüssigkeitsbehälters angeordnet ist. Ein weiterer Vorteil dieser Gestaltung besteht darin, dass die Fördereinheit nicht zu einer Verringerung des Volumens des Flüssigkeitsbehälters führt.

Ein schnelles Ansprechen der Förderung der Flüssigkeit nach der Beheizung und dem Start der Fördereinheit lässt sich gemäß einer anderen vorteilhaften Weiterbildung der Erfindung einfach erreichen, wenn der zweite Behälter eine mit Druck der Luftpumpe beaufschlagbare Bevorratungskammer und eine mit dem Anschlussstutzen der Vorlaufleitung verbundene Injektorkammer hat.

Wenn die Injektorkammer ein kleineres Volumen als die Bevorratungskammer aufweist, trägt dies zur weiteren Beschleunigung des Ansprechens der erfindungsgemäßen Entnahmeeinrichtung bei. Unter einer Injektorkammer wird insbesondere ein Abschnitt der Zuleitung hin zu einem Dosiermodul umfassen einen Injektor zur Abgabe der Flüssigkeit hin zu einem Abgas führenden Bauteil eines Abgassystems verstanden. Ganz besonders bevorzugt ist die Injektorkammer mit einem Entnahmerohr zur Entnahme der Flüssigkeit aus dem Behälter gebildet. Nach und/oder als Bestandteil dieser Injektorkammer können z.B. Filter, Sensoren, Leitungsabzweigungen (auch mit einem Ventil) und/oder dergleichen vorgesehen sein. Besonders bevorzugt, beispielsweise bei einer Ausprägung als Entnahmerohr, erstreckt sich die Injektorkammer nur von dem zweiten Behälter bis zu einem Austritt der Zuleitung aus dem ersten Behälter.

Ein besonders schnelles Ansprechen der Förderung der Flüssigkeit lässt sich einfach erreichen, wenn die Heizeinheit in der Injektorkammer angeordnet ist. Durch diese Gestaltung muss bei eingefrorener wässriger Lösung nur die besonders kleine Injektorkammer beheizt werden. Die Bevorratungskammer kann mit einer Zeitverzögerung durch die Abwärme der Injektorkammer beheizt werden. Hierdurch steht spätestens, wenn die wässrige Flüssigkeit aus der Injektorkammer verbraucht ist, neue und wässrige Flüssigkeit aus der Bevorratungskammer zur Verfügung.

Zur weiteren Beschleunigung des Auftauens und des Startens der erfindungsgemäßen Entnahmeeinrichtung trägt es bei, wenn der zweite Behälter eine mit der Luftpumpe verbundene Bedrückungskammer hat, wenn die Bedrückungskammer ein kleineres Volumen aufweist als die Bevorratungskammer und wenn ein Teil der Heizeinheit in oder an der Bedrückungskammer angeordnet ist.

Bei aufgetauter wässriger Lösung in der Bevorratungskammer lässt sich ein gleichmäßiger Druckaufbau in der Bevorratungskammer und der Bedrückungskammer sicherstellen, wenn die Bedrückungskammer und die Bevorratungskammer über einen im oberen Bereich des zweiten Behälters angeordneten Belüftungskanal miteinander verbunden sind.

Zur weiteren Beschleunigung des Ansprechens der erfindungsgemäßen Entnahmeeinrichtung trägt es bei, wenn zwischen der Luftpumpe und dem zweiten Behälter ein Rückschlagventil angeordnet ist.

Ein Nachströmen von Flüssigkeit aus dem Flüssigkeitsbehälter in den zweiten Behälter lässt sich gemäß einer anderen vorteilhaften Weiterbildung der Erfindung einfach sicherstellen, wenn die Bevorratungskammer und der Flüssigkeitsbehälter über ein in Richtung der Bevorratungskammer öffnendes Rückschlagventil miteinander verbunden sind. Hierdurch ist der zweite Behälter selbstbefüllend.

Ein wahlweiser Druckaufbau im zweiten Behälter und dessen Belüftung gegenüber dem Flüssigkeitsbehälter gestaltet sich gemäß einer anderen vorteilhaften Weiterbildung der Erfindung konstruktiv besonders einfach, wenn die Bevorratungskammer des zweiten Behälters und der Flüssigkeitsbehälter über ein schaltbares Belüftungsventil miteinander verbunden sind.
Die erfindungsgemäße Entnahmeeinrichtung gestaltet sich konstruktiv besonders einfach, wenn der zweite Behälter einen Flansch und davon abstehende Rohrstücke zur Bildung der Injektorkammer und der Bevorratungskammer und/oder der Bedrückungskammer aufweist, wenn der Flansch eine in der Oberseite des Flüssigkeitsbehälters angeordnete Montageöffnung verschließt und wenn die Rohrstücke bis zu einem Bodenbereich des Flüssigkeitsbehälters geführt sind. Ein weiterer Vorteil dieser Gestaltung ist, dass die Entnahmeeinrichtung durch einfaches Anpassen der Länge der Rohrstücke auf die Höhe des Flüssigkeitsbehälters angepasst werden kann.

Der zweite Behälter lässt sich gemäß einer anderen vorteilhaften Weiterbildung der Erfindung besonders kostengünstig im Extrusionsverfahren fertigen, wenn die Rohrstücke einstückig als Profilstück gefertigt sind.

Die erfindungsgemäße Entnahmeeinrichtung gestaltet sich gemäß einer anderen vorteilhaften Weiterbildung der Erfindung konstruktiv besonders einfach, wenn die Luftpumpe auf der Außenseite des Flansches angeordnet ist.

Ein Eindringen von Luft in den zweiten Behälter bei nahezu leerem Flüssigkeitsbehälter lässt sich gemäß einer anderen vorteilhaften Weiterbildung der Erfindung einfach vermeiden, wenn die in den Flüssigkeitsbehälter hineinragende Enden der Rohrstücke von einem Fußteil derart abgedeckt sind, dass sie untereinander unmittelbar miteinander und gegenüber dem Flüssigkeitsbehälter ausschließlich über das in Richtung des zweiten Behälters öffnenden Rückschlagventils verbunden sind.

Eine Befüllung des zweiten Behälters mit Flüssigkeit aus dem Flüssigkeitsbehälter lässt sich gemäß einer anderen vorteilhaften Weiterbildung der Erfindung einfach sicherstellen, wenn die Luftpumpe mit einem schaltbaren Befüllventil verbunden ist und wenn das Befüllventil zur wahlweisen Verbindung der Druckseite der Luftpumpe mit dem Flüssigkeitsbehälter oder dem zweiten Behälter und zur Entlüftung des jeweils anderen Behälters ausgebildet ist. Weiterhin lässt sich hierdurch die Gefahr eines Entweichens von in dem zweiten Behälter befindlicher Flüssigkeit in die Umgebung besonders gering halten. Die Entlüftungseinrichtung des Flüssigkeitsbehälters ermöglicht hierfür einen begrenzten Druckaufbau.

Gegebenenfalls kann die Luftpumpe auch als Saugvorrichtung eingesetzt bzw. ausgebildet sein, so dass sich mit dieser (zeitweise und/oder bedarfsgerecht) ein Teil der Behälter, insbesondere z.B. die Injektorkammer, wenigstens teilweise entleeren lässt.

Die Erfindung lässt zahlreiche Ausführungsformen zu. Zur weiteren Verdeutlichung ihres Grundprinzips mehrere davon in der Zeichnung dargestellt und werden nachfolgend beschrieben. Diese zeigt in
- Fig. 1: eine erfindungsgemäße Entnahmeeinrichtung für ein Kraftfahrzeug im Teilschnitt,
- Fig. 2: eine Schnittdarstellung durch die Entnahmeeinrich- tung aus Figur 1,
- Fig. 3: eine Schnittdarstellung durch die Entnahmeeinrich- tung aus Figur 2 entlang der Linie III - III,
- Fig. 4: eine Schnittdarstellung durch einen Behälter der Entnahmeeinrichtung aus Figur 3 entlang der Linie IV - IV,
- Fig. 5: einen Schaltplan der erfindungsgemäßen Entnahmeein- richtung aus den Figuren 1 bis 4,
- Fig. 6: einen Schaltplan eines Teilbereichs einer weiteren Ausführungsform der Entnahmeeinrichtung.

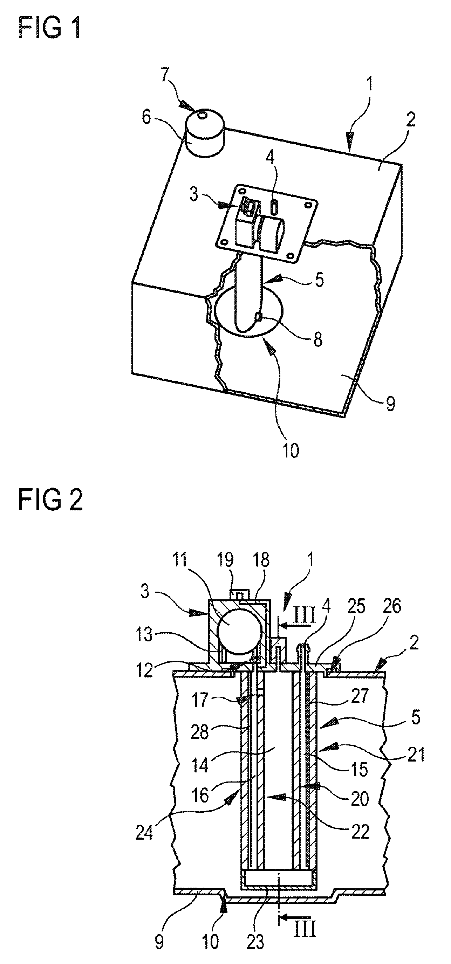

Figur 1 zeigt eine Entnahmeeinrichtung 1 für eine wässrige Harnstoff-Lösung in einem Kraftfahrzeug im Teilschnitt. Die Entnahmeeinrichtung 1 hat einen Flüssigkeitsbehälter 2 zur Aufnahme der Lösung und eine Fördereinheit 3 zur Förderung der Lösung zu einem Anschlussstutzen 4. An dem Anschlussstutzen 4 lässt sich eine nicht dargestellte Vorlaufleitung anschließen, welche zu einer ebenfalls nicht dargestellten Einrichtung zur Verringerung von Stickoxidemissionen einer Brennkraftmaschine führbar ist. Die Entnahmeeinrichtung 1 hat einen in dem Flüssigkeitsbehälter 2 angeordneten zweiten Behälter 5. Der Flüssigkeitsbehälter 2 weist einen Einfüllstutzen 6 mit einer schematisch dargestellten Belüftungseinrichtung 7 auf. Diese Belüftungseinrichtung 7 ermöglicht einen begrenzten Druckaufbau im Flüssigkeitsbehälter 2. Der zweite Behälter 5 ist über ein Rückschlagventil 8 mit dem Flüssigkeitsbehälter 2 verbunden. Das Rückschlagventil 8 ermöglicht ausschließlich eine Strömung der Lösung von dem Flüssigkeitsbehälter 2 in den zweiten Behälter 5. Der Flüssigkeitsbehälter 2 hat in seinem Boden 9 eine Senke 10, in die das das Rückschlagventil 8 aufweisende Ende des zweiten Behälters 5 eintaucht.

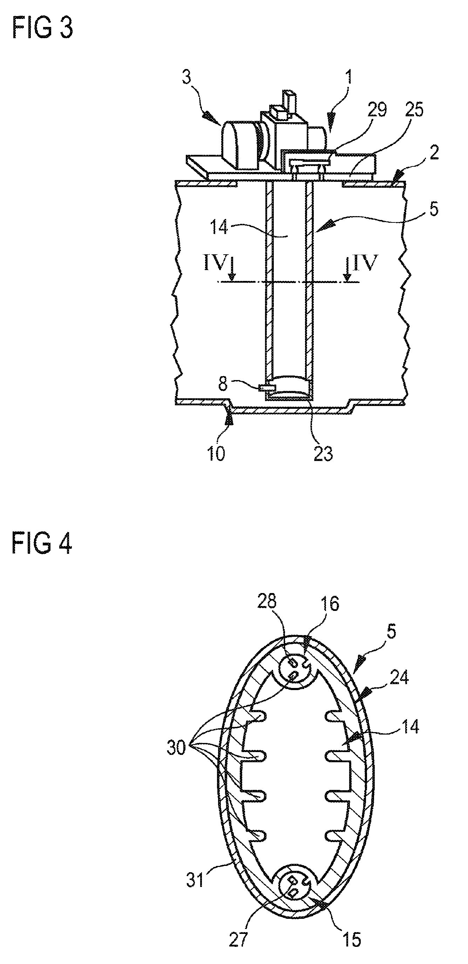

Figur 2 zeigt in einer Schnittdarstellung durch die Entnahmeeinrichtung 1 aus Figur 1, dass die Fördereinheit 3 eine Luftpumpe 11 mit einem zu dem zweiten Behälter 5 führenden Rückschlagventil 12 und einen in die Umgebung geführten Ansaugstutzen 13 hat. Der zweite Behälter 5 hat eine Bevorratungskammer 14 zum Sammeln der Flüssigkeit und eine zu dem Anschlussstutzen 4 geführte Injektorkammer 15. Weiterhin hat der zweite Behälter 5 eine bis zu dem Rückschlagventil 12 der Fördereinheit 3 geführte Bedrückungskammer 16. Die Bedrückungskammer 16 und die Bevorratungskammer 14 sind über einen im oberen, dem Rückschlagventil 12 der Fördereinheit 3 nahen Ende angeordneten Belüftungskanal 17 miteinander verbunden. Ein Sensorkanal 18 verbindet einen Drucksensor 19 mit der Bedrückungskammer 16. Die Bevorratungskammer 14, die Bedrückungskammer 16 und die Injektorkammer 15 sind als vertikale Rohrstücke 20, 21, 22 gefertigt und über ein Fußteil 23 miteinander verbunden. Die Rohrstücke 20 - 22 sind als gemeinsames Profilstück 24 gefertigt und an einem Flansch 25 befestigt. Zur Vereinfachung der Zeichnung ist in Figur 3 das Profilstück 24 stark vereinfacht dargestellt. Bezüglich der konstruktiven Gestaltung des Profilstücks 24 wird auf Figur 4 verwiesen. Der Flansch 25 trägt die Luftpumpe 11 und dichtet eine Montageöffnung 26 des Flüssigkeitsbehälters 2 ab. An dem dem Flansch 25 abgewandten Ende ist das Profilstück 24 mittels des Fußteils 23 gegenüber dem Flüssigkeitsbehälter 2 abgedichtet. Eine Heizeinheit mit zwei Heizelementen 27, 28 dient zur Beheizung der Bedrückungskammer 16 und der Injektorkammer 15. Alternativ dazu kann die Heizeinheit auch eine auf der Außenseite des Profilstücks 24 angeordnete Heizmatte aufweisen.

Figur 3 zeigt eine Schnittdarstellung durch die Entnahmeeinrichtung 1 aus Figur 2 entlang der Linie III - III. Auf dem Flansch 25 ist ein schaltbares Belüftungsventil 29 angeordnet. Das Belüftungsventil 29 öffnet oder versperrt wahlweise eine Verbindung des Flüssigkeitsbehälters 2 mit der Bevorratungskammer 14 des zweiten Behälters 5.

Figur 4 zeigt in einer Schnittdarstellung durch den zweiten Behälter 5 aus Figur 3 entlang der Linie IV - IV das gemeinsame, die Bedrückungskammer 16, die Bevorratungskammer 14 und die Injektorkammer 15 bildende Profilstück 24. Das Profilstück 24 ist aus Leichtmetall im Extrusionsverfahren gefertigt und weist eine Vielzahl von Wärme leitenden, radial nach innen ragenden Rippen 30 auf. An der Außenseite des Profilstücks 24 ist eine Ummantelung 31 zur Isolierung angeordnet.

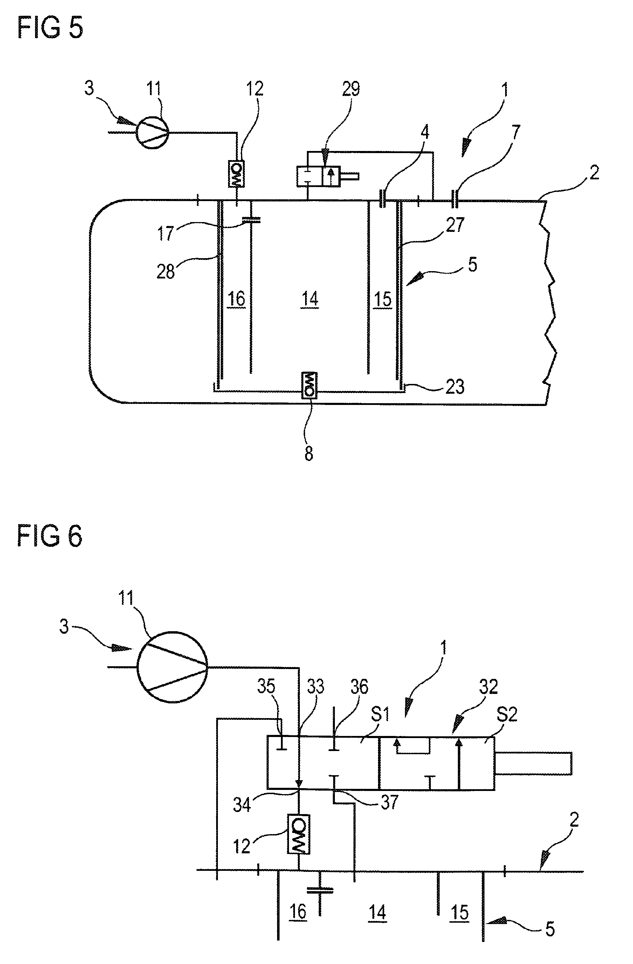

Figur 5 zeigt einen Schaltplan der Entnahmeeinrichtung 1 aus den Figuren 1 bis 4. Bei einem Betrieb der Entnahmeeinrichtung 1 wird die Luftpumpe 11 eingeschaltet und fördert Luft aus der Umgebung in die Bedrückungskammer 16. Über den Belüftungskanal 17 kann die Luft auch in die Bevorratungskammer 14 überströmen. In der Bedrückungskammer 16 und in der Bevorratungskammer 14 vorhandene Lösung wird durch den Luftdruck in die Injektorkammer 15 gedrückt und damit zu dem Anschlussstutzen 4 gefördert. Das schaltbare Belüftungsventil 29 trennt bei dieser Förderung den zweiten Behälter 5 von dem Flüssigkeitsbehälter 2. Nach der Förderung der Lösung ist der Flüssigkeitsspiegel in der Bevorratungskammer 14 und der Bedrückungskammer 16 gesunken. Zum Nachströmen von Flüssigkeit in den zweiten Behälter 5 wird die Luftpumpe 11 abgeschaltet und das Belüftungsventil 29 geöffnet, wodurch Lösung aus dem Flüssigkeitsbehälter 2 durch das im Boden des zweiten Behälters 5 angeordnete Rückschlagventil 8 in den zweiten Behälter 5 einströmen kann. Durch die Belüftungseinrichtung 7 kann Luft aus der Umgebung in den Flüssigkeitsbehälter 2 einströmen und die verdrängte Lösung ersetzen.

Wenn die wässrige Lösung eingefroren ist, werden die Heizelemente 27, 28 in der Injektorkammer 15 und in der Bedrückungskammer 16 bestromt und die darin befindliche Flüssigkeit aufgetaut. Da die Injektorkammer 15 und die Bedrückungskammer 16 nur ein sehr kleines Volumen aufweisen, erfolgt der Auftauvorgang in einer besonders kurzen Zeit. Da Eis leichter ist als aufgetaute Flüssigkeit, ist zudem die Verbindung der Bedrückungskammer 16 mit der Injektorkammer 15 im Fußteil 23 des zweiten Behälters 5 ebenfalls nach kurzer Zeit eisfrei. Durch Wärmeleitung wird nach einiger Zeit auch die Flüssigkeit in der Bevorratungskammer 14 aufgetaut, so dass die gesamte, im zweiten Behälter 5 befindliche Flüssigkeit zu dem Anschlussstutzen 4 gefördert werden kann.

Figur 6 zeigt einen Schaltplan einer weiteren Ausführungsform der Entnahmenrichtung 1. Bei dieser Ausführungsform hat ein schaltbares Befüllventil 32 jeweils zu der Luftpumpe 11 und zu dem Rückschlagventil 12 im Flansch führende Anschlüsse 33, 34. Das Befüllventil hat zudem einen zu dem Flüssigkeitsbehälter 2 geführten Anschluss 35, einen in die Umgebung geführten Anschluss 36 und einen in die Bevorratungskammer 14 geführten Anschluss 37 für einen Druckausgleich. In einer dargestellten ersten Schaltstellung S1 des Befüllventils 32 sind die Anschlüsse 33, 34 der Luftpumpe 11 und des Rückschlagventils 12 miteinander verbunden und die übrigen Anschlüsse 35 - 37 geschlossen. Dies kennzeichnet die zu Figur 5 beschriebene Funktion der Entnahmeeinrichtung 1.

In einer zweiten Schaltstellung S2 des Befüllventils 32 sind die Anschlüsse 33, 34 der Luftpumpe 11 und des Rückschlagventils 12 voneinander getrennt. Der Anschluss 33 der Luftpumpe 11 ist in der zweiten Schaltstellung S2 mit dem zu dem Flüssigkeitsbehälter 2 führenden Anschluss 35 verbunden. Der Anschluss 37 der Bevorratungskammer 14 ist mit dem in die Umgebung führenden Anschluss 36 verbunden. Beim Start der Luftpumpe 11 wird damit ein Druck in dem Flüssigkeitsbehälter 2 bis zu der Begrenzung durch die Belüftungseinrichtung 7 aufgebaut, wodurch in dem Flüssigkeitsbehälter 2 befindliche Lösung in den zweiten Behälter 5 überströmen kann. In dem zweiten Behälter 5 verdrängte Luft gelangt über das Befüllventil 32 in die Umgebung.

In einer nicht dargestellten Ausführungsform der Entnahmeeinrichtungen sind die Funktionen des Belüftungsventils 29 aus Figur 5 und des Befüllventils 32 aus Figur 6 in einem einzigen Ventil verwirklicht.

## Patentansprüche

1. Entnahmeeinrichtung einer wässrigen Harnstoff-Lösung in einem Kraftfahrzeug mit einem Flüssigkeitsbehälter zur Speicherung der Lösung und mit einer Fördereinheit zur Förderung der Lösung aus dem Flüssigkeitsbehälter, **dadurch gekennzeichnet, dass** ein zweiter, zum Sammeln aus dem Flüssigkeitsbehälter (2) ausgebildeter Behälter (5) in den Flüssigkeitsbehälter (2) hineinragend angeordnet ist, und dass der zweite Behälter (5) eine Heizeinheit zur Beheizung der zu fördernden Lösung aufweist, und dass ein Anschlussstutzen (4) einer Vorlaufleitung mit dem Bodenbereich des zweiten Behälters (5) verbunden ist, und dass die Fördereinheit (3) zur Förderung der Lösung aus dem zweiten Behälter (5) ausgebildet und mit dem zweiten Behälter (5) verbunden ist, wobei die Fördereinheit (3) zur Förderung der Lösung aus dem zweiten Behälter (5) zum Anschlussstutzen wenigstens eine Luftpumpe (11) aufweist.

2. Entnahmeeinrichtung nach Anspruch 1, **dadurch gekennzeichnet, dass** diese so ausgeführt ist, dass die Luftpumpe (11) im Betrieb der Entnahmeeinrichtung Luft aus der Umgebung in den zweiten Behälter (5) fördert, und mit dem von der Luftpumpe erzeugten Luftdruck wässrige Harnstoff-Lösung zu dem Anschlussstutzen (4) gefördert wird.

3. Entnahmeeinrichtung nach Anspruch 1 oder 2, **dadurch gekennzeichnet, dass** die Luftpumpe (11) der Fördereinheit (3) ausserhalb des Flüssigkeitsbehälters (2) angeordnet ist.

4. Entnahmeeinrichtung nach Anspruch 1, 2 oder 3, **dadurch gekennzeichnet, dass** der zweite Behälter (5) eine mit Druck der Luftpumpe (11) beaufschlagbare Bevorratungskammer (14) und eine mit dem Anschlussstutzen (4) der Vorlaufleitung verbundene Injektorkammer (15) hat.

5. Entnahmeeinrichtung nach Anspruch 4, **dadurch gekennzeichnet, dass** die Injektorkammer (15) ein kleineres Volumen aufweist als die Bevorratungskammer (14).

6. Entnahmeeinrichtung nach einem der vorhergehenden Ansprüche, **dadurch gekennzeichnet, dass** die Heizeinheit in oder an der Injektorkammer (15) angeordnet ist.

7. Entnahmeeinrichtung nach einem der Ansprüche 5 oder 6, **dadurch gekennzeichnet, dass** der zweite Behälter (5) eine mit der Luftpumpe (11) verbundene Bedrückungskammer (16) hat, dass die Bedrückungskammer (16) ein kleineres Volumen aufweist als die Bevorratungskammer (14) und dass ein Teil der Heizeinheit in oder an der Bedrückungskammer (16) angeordnet ist, wobei bevorzugt die Bedrückungskammer (16) und die Bevorratungskammer (14) über einen im oberen Bereich des zweiten Behälters (5) angeordneten Belüftungskanal (17) miteinander verbunden sind,

8. Entnahmeeinrichtung nach einem der Ansprüche 1 bis 7, **dadurch gekennzeichnet, dass** zwischen der Luftpumpe (11) und dem zweiten Behälter (5) ein Rückschlagventil (12) angeordnet ist.

9. Entnahmeeinrichtung nach einem der Ansprüche 4 bis 8, **dadurch gekennzeichnet, dass** die Bevorratungskammer (14) und der Flüssigkeitsbehälter (2) über ein in Richtung der Bevorratungskammer (14) öffnendes Rückschlagventil (8) miteinander verbunden sind.

10. Entnahmeeinrichtung nach einem der Ansprüche 4 bis 9, **dadurch gekennzeichnet, dass** die Bevorratungskammer (14) des zweiten Behälters (5) und der Flüssigkeitsbehälter (2) über ein schaltbares Belüftungsventil (29) miteinander verbunden sind.

11. Entnahmeeinrichtung nach einem der Ansprüche 4 bis 10, **dadurch gekennzeichnet, dass** der zweite Behälter (5) einen Flansch (25) und davon abstehende Rohrstücke (20 - 22) zur Bildung der Injektorkammer (15) und der Bevorratungskammer (14) und/oder der Bedrückungskammer (16) aufweist, dass der Flansch (25) eine in der Oberseite des Flüssigkeitsbehälters (2) angeordnete Montageöffnung (26) verschliesst und dass die Rohrstücke (20 - 22) bis zu einem Bodenbereich des Flüssigkeitsbehälters (2) geführt sind.

12. Entnahmeeinrichtung nach Anspruch 11, **dadurch gekennzeichnet, dass** die Rohrstücke (20 - 22) einstückig als Profilstück (24) gefertigt sind, wobei bevorzugt die Luftpumpe (11) auf der Aussenseite des Flansches (25) angeordnet ist.

13. Entnahmeeinrichtung nach Anspruch 12, **dadurch gekennzeichnet, dass** die in den Flüssigkeitsbehälter (2) hineinragende Enden der Rohrstücke (20 - 22) von einem Fussteil (23) derart abgedeckt sind, dass sie unmittelbar miteinander und gegenüber dem Flüssigkeitsbehälter (2) ausschliesslich über das in Richtung des zweiten Behälters 5) öffnenden Rückschlagventils (8) verbunden sind.

14. Entnahmeeinrichtung nach einem der vorhergehenden Ansprüche, **dadurch gekennzeichnet, dass** die Luftpumpe (11) mit einem schaltbaren Befüllventil (32) verbunden ist und dass das Befüllventil (32) zur wahlweisen Verbindung der Druckseite der Luftpumpe (11) mit dem Flüssigkeitsbehälter (2) oder dem zweiten Behälter (5) und zur Entlüftung des jeweils anderen Behälters ausgebildet ist.

## Claims

1. Withdrawal device for an aqueous urea solution in a motor vehicle, having a liquid reservoir for storing the solution and having a delivery unit for delivering the solution from the liquid reservoir, **characterized in that** a second reservoir (5) designed for collecting from the liquid reservoir (2) is arranged projecting into the liquid reservoir (2), and **in that** the second reservoir (5) comprises a heating unit for heating the solution to be delivered, and **in that** a connecting piece (4) of a flow line is connected to the base region of the second reservoir (5), and **in that** the delivery unit (3) is designed to deliver the solution from the second reservoir (5) and connected to the second reservoir (5), the delivery unit (3) comprising at least one air pump (11) for delivering the solution from the second reservoir (5) to the connecting piece.

2. Withdrawal device according to Claim 1, **characterized in that** it is constructed such that the air pump (11) delivers air from the surrounding environment into the second reservoir (5) when the withdrawal device is in operation, and aqueous urea solution is delivered to the connecting piece (4) with the air pressure produced by the air pump.

3. Withdrawal device according to Claim 1 or 2, **characterized in that** the air pump (11) of the delivery unit (3) is arranged outside the liquid reservoir (2).

4. Withdrawal device according to Claim 1, 2 or 3, **characterized in that** the second reservoir (5) has a storage chamber (14) which may be exposed to the pressure of the air pump (11) and an injector chamber (15) connected to the connecting piece (4) of the flow line.

5. Withdrawal device according to Claim 4, **characterized in that** the injector chamber (15) has a smaller volume than the storage chamber (14).

6. Withdrawal device according to one of the preceding claims, **characterized in that** the heating unit is arranged in or on the injector chamber (15).

7. Withdrawal device according to one of Claims 5 or 6, **characterized in that** the second reservoir (5) has a pressurization chamber (16) connected to the air pump (11), **in that** the pressurization chamber (16) has a smaller volume than the storage chamber (14) and **in that** part of the heating unit is arranged in or on the pressurization chamber (16), the pressurization chamber (16) and the storage chamber (14) preferably being connected together via a ventilation duct (17) arranged in the upper region of the second reservoir (5).

8. Withdrawal device according to one of Claims 1 to 7, **characterized in that** a non-return valve (12) is arranged between the air pump (11) and the second reservoir (5).

9. Withdrawal device according to one of Claims 4 to 8, **characterized in that** the storage chamber (14) and the liquid reservoir (2) are connected together via a non-return valve (8) opening towards the storage chamber (14).

10. Withdrawal device according to one of Claims 4 to 9, **characterized in that** the storage chamber (14) of the second reservoir (5) and the liquid reservoir (2) are connected together via a switchable ventilation valve (29).

11. Withdrawal device according to one of Claims 4 to 10, **characterized in that** the second reservoir (5) comprises a flange (25) and pipe pieces (20-22) projecting therefrom for forming the injector chamber (15) and the storage chamber (14) and/or the pressurization chamber (16), **in that** the flange (25) closes a mounting opening (26) arranged in the top of the liquid reservoir (2) and **in that** the pipe pieces (20-22) are guided as far as a base region of the liquid reservoir (2).

12. Withdrawal device according to Claim 11, **characterized in that** the pipe pieces (20-22) are made in one piece as a profile piece (24), the air pump (11) preferably being arranged on the outside of the flange (25).

13. Withdrawal device according to Claim 12, **characterized in that** the ends of the pipe pieces (20-22) projecting into the liquid reservoir (2) are covered by a foot part (23) in such a way that they are connected directly together and relative to the liquid reservoir (2) solely via the non-return valve (8) opening towards the second reservoir (5).

14. Withdrawal device according to one of the preceding claims, **characterized in that** the air pump (11) is connected to a switchable filling valve (32) and **in that** the filling valve (32) is designed for optional connection of the pressure side of the air pump (11) to the liquid reservoir (2) or the second reservoir (5) and for ventilation of the in each case other reservoir.

## Revendications

1. Dispositif de prélèvement d'une solution aqueuse d'urée dans un véhicule automobile, comprenant un récipient à liquide pour le stockage de la solution et comprenant une unité de transport pour transporter la solution hors du récipient à liquide, **caractérisé en ce qu'**un deuxième récipient (5) constitué pour la collecte à partir du récipient (2) à liquide pénètre dans le récipient (2) à liquide et **en ce que** le deuxième récipient (5) comporte un groupe de chauffage pour le chauffage de la solution à transporter et **en ce qu'**une tubulure (4) de raccordement d'un conduit d'alimentation est reliée à la partie de fond du deuxième récipient (5) et **en ce que** le groupe (3) de transport est constitué pour le transport de la solution hors du deuxième récipient (5) et est relié au deuxième récipient (5), le groupe (3) de transport pour le transport de la solution hors du deuxième récipient (5) vers la tubulure de raccordement ayant au moins une pompe (11) à air.

2. Dispositif de prélèvement suivant la revendication 1, **caractérisé en ce qu'**il est tel que la pompe (11) à air transporte, lorsque le dispositif de prélèvement fonctionne, de l'air de l'atmosphère ambiante dans le deuxième récipient (5) et par la pression d'air produite par la pompe à air de la solution aqueuse d'urée est transportée vers la tubulure (4) de raccordement.

3. Dispositif de prélèvement suivant la revendication 1 ou 2, **caractérisé en ce que** la pompe (11) à air du groupe (3) de transport est disposée à l'extérieur du récipient (2) à liquide.

4. Dispositif de prélèvement suivant la revendication 1, 2 ou 3, **caractérisé en ce que** le deuxième récipient (5) a une chambre (4) de réserve pouvant être soumise à la pression de la pompe (11) à air et une chambre (15) d'injecteur reliée à la tubulure (4) de raccordement du conduit d'alimentation.

5. Dispositif de prélèvement suivant la revendication 4, **caractérisé en ce que** la chambre (15) d'injecteur ayant un volume plus petit que la chambre a un volume plus petit que la chambre (14) de réserve.

6. Dispositif de prélèvement suivant l'une des revendications précédentes, **caractérisé en ce que** le groupe de chauffage est disposé dans ou sur la chambre (15) d'injecteur.

7. Dispositif de prélèvement suivant l'une des revendications 5 ou 6, **caractérisé en ce que** le deuxième récipient (5) a une chambre (16) de mise sous pression, **en ce que** la chambre (16) de mise sous pression a un volume plus petit que la chambre (14) de réserve et **en ce qu'**une partie du groupe de chauffage est disposée dans ou sur la chambre (16) de mise sous pression, la chambre (16) de mise sous pression et la chambre (14) de réserve étant de préférence reliée l'une à l'autre par un canal (17) d'aération monté dans la partie supérieure du deuxième récipient (5).

8. Dispositif de prélèvement suivant l'une des revendications 1 à 7, **caractérisé en ce qu'**un clapet anti-retour (12) est monté entre la pompe (1) à air et le deuxième récipient (5).

9. Dispositif de prélèvement suivant l'une des revendications 4 à 8, **caractérisé en ce que** la chambre (14) de réserve et le récipient (2) à liquide sont reliés entre eux par un clapet (8) anti-retour s'ouvrant dans la direction de la chambre (14) de réserve.

10. Dispositif de prélèvement suivant l'une des revendications 4 à 9, **caractérisé en ce que** la chambre (14) de réserve du deuxième récipient (5) et le récipient (2) à liquide sont reliés entre eux par une vanne (29) d'aération pouvant être commutée.

11. Dispositif de prélèvement suivant l'une des revendications 4 à 10, **caractérisé en ce que** le deuxième récipient (5) comporte une bride (25) et des tronçons (20 à 22) tubulaires qui en partent pour former la chambre (15) d'injecteur et la chambre (14) de réserve et/ou la chambre (16) de mise sous pression, **en ce que** la bride (25) ferme une ouverture (26) de montage disposée du côté supérieur du récipient (2) à liquide et **en ce que** les tronçons (20 à 22) tubulaires vont jusqu'à une zone de fond du récipient (2) à liquide.

12. Dispositif de prélèvement suivant la revendication 11, **caractérisé en ce que** les tronçons (20 à 22) tubulaires sont fabriqués d'une seule pièce sous la forme d'une pièce (24) profilée, la pompe (11) à air étant disposée de préférence sur le côté extérieur de la bride (25).

13. Dispositif de prélèvement suivant la revendication 12, **caractérisé en ce que** les extrémités, pénétrant dans le récipient (2) à liquide, des tronçons (20 à 22) tubulaires sont recouvertes par une partie (13) formant pied de manière à être reliées directement entre elles et par rapport au récipient (2) à liquide exclusivement par le clapet (8) anti-retour s'ouvrant dans la direction du deuxième récipient (5).

14. Dispositif de prélèvement suivant l'une des revendications précédentes, **caractérisé en ce que** la pompe (11) à air est reliée à une soupape (32) de remplissage et **en ce que** la soupape (32) de remplissage est constituée pour la liaison au choix du côté refoulement de la pompe (11) à air avec le récipient (2) à liquide ou avec le deuxième récipient (5) et pour la mise à l'atmosphère de respectivement l'autre récipient.
